# NOUVEAU FASCICULE DE BREVET EUROPEEN

(11) **EP 0 944 687 B2**
(45) Date de publication et mention de la décision concernant l'opposition: **09.09.2009**
(45) Mention de la délivrance du brevet: 29.09.2004
(21) Numéro de dépôt: 98947602.3
(22) Date de dépôt: 06.10.1998
(51) Int. Cl.: C09K 3/18, C03C 17/30, C09D 183/08

(54) **REVETEMENT HYDROPHOBE NOTAMMENT POUR VITRAGE**
WASSERABWEISENDE BESCHICHTUNG INSBESONDERE FÜR VERGLASUNG
HYDROPHOBIC COATING IN PARTICULAR FOR GLAZING SHEET

(30) Priorité: 06.10.1997 FR 9712410
(43) Date de publication de la demande: 29.09.1999
(73) Titulaire: SAINT-GOBAIN GLASS FRANCE, 92400 Courbevoie (FR)
(72) Inventeur: AZZOPARDI, Marie-José, F-94300 Vincennes (FR); DELATTRE, Laurent, F-75013 Paris (FR); CODAZZI, Nathalie, F-95600 Eaubonne (FR)
(74) Mandataire: Muller, René
(86) Numéro de dépôt international: PCT/FR1998/002123
(87) Numéro de publication internationale: WO 1999/018168

(56) Documents cités:
- EP- - 49 125 1A1
- EP-A- 0 482 613
- EP-A- 0 484 746
- EP-A- 0 492 545
- EP-A- 0 719 743
- EP-A2- 0 545 201
- DE-A1- 4 218 657
- US- - 5 523 161
- PATENT ABSTRACTS OF JAPAN vol. 015, no. 100 (C-0813), 11 mars 1991 & JP 02 311332 A (SEKISUI CHEM CO LTD), 26 décembre 1990

## Description

La présente invention concerne une composition pour un revêtement non mouillable et un procédé pour son application sur un substrat. Elle s'applique de manière privilégiée à un tel substrat transparent ; à ce titre, elle est donc relative, en particulier, à la fabrication d'un vitrage muni d'un revêtement non mouillable.

Les vitrages envisagés selon l'invention sont des vitrages en verre et/ou en matière plastique telle que poly(méthacrylate de méthyle) (PMMA), polyvinylbutyral (PVB), polycarbonate (PC) ou polyuréthane (PU). Ils sont utilisés, en particulier, dans le domaine aéronautique, ferroviaire ou automobile. Ils peuvent aussi être utilisés dans le domaine du bâtiment ou dans le domaine de l'aménagement intérieur comme, par exemple, des panneaux décoratifs, pour l'ameublement, l'électroménager (portes de réfrigérateurs, de fours, vitrines) etc.

Le caractère de mouillabilité auquel il est fait référence vise le fait que des liquides polaires ou non polaires adhèrent sur le substrat et forment un film gênant. Par mouillabilité, on désigne aussi la tendance des substrats à retenir les poussières ou salissures de toutes natures, traces de doigts, insectes, etc.

La présence d'eau et/ou de salissures entraîne un aspect inesthétique, une éventuelle diminution de la transparence du substrat ainsi qu'une altération de la vision à travers celui-ci. Ces dernières sont particulièrement gênantes lorsque le substrat est un vitrage utilisé dans le domaine du transport.

La propriété de non-mouillabilité d'un substrat, plus communément désignée hydrophobie/oléophobie, consiste en ce que les angles de contact entre un liquide et ce substrat sont élevés, par exemple d'au moins 90° pour l'eau. Le liquide a alors tendance à s'écouler aisément, sous forme de gouttes, sur le substrat, par simple gravité si le substrat est incliné, ou sous l'effet de forces aérodynamiques dans le cas d'un véhicule en mouvement. Des agents connus pour conférer cette propriété d'hydrophobie/oléophobie sont, par exemple, des alkylsilanes fluorés tels que décrits dans les demandes de brevets EP 0 492 417, EP 0 492 545 et EP 0 672 779. Selon ces documents, cette couche est obtenue en appliquant sur la surface d'un substrat une solution contenant des organosilanes fluorés dans un solvant organique non aqueux. Comme solvant organique non aqueux, le document EP 0 492 545 cite, en particulier, du n-hexadécane, du toluène, du xylène, etc. Ces solvants sont particulièrement appropriés pour un chlorosilane fluoré. Il est également possible, selon ce document, d'utiliser un alcool méthylique ou éthylique comme solvant lorsque le silane fluoré est un alkoxysilane fluoré.

Des agents hydrophobes/oléophobes courants sont, en particulier, des alkyl-triyhalogéno- ou -trialkoxy- silanes dont le groupe alkyle comporte au moins une extrémité perfluorée, c'est-à-dire consistant en un groupement F₃C-(CF₂)-ₙ, dans lequel n est un nombre entier positif ou nul. Pour ceux-ci, la demande de brevet EP 0 719 743 indique les carbures perfluorés comme solvants appropriés.

Les agents hydrophobes/oléophobes sont appliqués de manière connue en solution selon des modes de dépôt classiques avec ou sans chauffage.

La préparation du substrat par un traitement préalable à l'aide d'un primaire du type tétrahalogéno- ou tétraalkoxy- silane est également connue et décrite, entre autres, dans la demande EP 0 484 746. Elle vise à accroître l'adhésion du revêtement hydrophobe/oléophobe sur le substrat.

On connait encore du document EP 0 482 613 un film de revêtement forme d'une sous-couche à base de siloxane et une couche externe à base d'un polymère fluorocarboné formé soit d'un chlorosilane perfluoré soit d'un alkoxysilane perfluoré.

L'un des problèmes se posant avec le plus d'acuité dans le domaine de l'invention est celui de l'érosion du revêtement hydrophobe/oléophobe. Cette érosion se produit plus ou moins au cours des opérations de nettoyage du substrat, périodiquement indispensables en particulier pour restaurer une vision satisfaisante à travers un substrat transparent. On cherche ainsi constamment à ralentir l'élimination progressive des revêtements hydrophobes/oléophobes de types précités, qui se produit notamment sous l'action d'essuie-glaces. D'autre part, une telle élimination peut aussi résulter d'une dégradation par le rayonnement ultraviolet.

Les inventeurs sont parvenus à élaborer un revêtement hydrophobe/oléophobe spécialement adapté aux substrats transparents minéraux ou organiques, c'est-à-dire en verre ou en matière plastique, et qui se distingue par d'excellentes propriétés d'accrochage et de résistance à l'abrasion.

A cette fin, l'invention se rapporte à une composition pour un revêtement hydrophobe/oléophobe qui se caractérise en ce qu'elle contient simultanément au moins un alkoxysilane et au moins un halogénosilane ayant chacun, à une extrémité au moins de leur molécule, un groupement perfluoré.

Plus particulièrement, l'invention a pour objet une composition selon la revendication 1 ci-après.

De préférence, un rapport molaire de l'alkoxysilane à l'halogénosilane compris entre 80:20 et 20:80, ou mieux entre 60:40 et 40:60 est préconisé.

D'autre part, l'invention a également pour objets :
1) un procédé de formation d'un revêtement hydrophobe/oléophobe sur un substrat qui comprend les étapes consistant à :
   - nettoyer le substrat,
   - appliquer de préférence un primaire, tel que comprenant un silane à trois ou quatre groupes hydrolysables,
   - appliquer une composition selon l'invention, et
   - soumettre l'ensemble à un traitement thermique, cette opération étant facultative ;
2) un ensemble de traitement hydrophobe/oléophobe directement prêt à l'emploi, constitué d'un récipient contenant une composition telle que décrite ci-dessus, et ne nécessitant l'ajout séparé d'aucun catalyseur ou agent auxiliaire de traitement quelconque (la possibilité de former le revêtement par application d'une composition unique est d'un intérêt pratique évident pour l'utilisateur et constitue l'un des avantages majeurs procurés par l'invention) ;
3) un substrat sur lequel a été formé un revêtement hydrophobe/oléophobe à partir d'une composition conforme à l'invention ; et
4) un vitrage monolithique, feuilleté ou multiple dont au moins une face extérieure en verre ou en matière plastique est munie au moins en partie d'un revêtement hydrophobe/oléophobe formé à partir d'une composition selon l'invention.

En ce qui concerne ce dernier objet de l'invention on entend :
- par « vitrage monolithique », un vitrage constitué d'une unique feuille de verre ou de matière plastique telle que polycarbonate, poly(méthacrylate de méthyle)... ;
- par « vitrage feuilleté » un empilement de plusieurs feuilles solidaires les unes des autres, par exemple de feuilles de verre ou de matière plastique fixées les unes aux autres au moyen de couches adhésives de polyvinylbutyral, polyuréthane... ; et
- par « vitrage multiple » un assemblage de feuilles disjointes, c'est-à-dire notamment séparées les unes des autres par des couches d'air.

Par « face extérieure » du vitrage, traitée conformément à l'invention, on signifie une surface en contact avec l'atmosphère ambiante. Il peut s'agir de la surface d'un vitrage de véhicule automobile ou de bâtiment susceptible d'être en contact avec la pluie ou des liquides organiques, ou bien encore d'une vitre de douche ou similaire...

D'autres caractéristiques et avantages de l'invention apparaîtront dans les exemples suivants:

### EXEMPLES

Des substrats identiques de verre float sont traités au moyen de solutions de F₃C(CF₂)₇(CH₂)₂SiCl₃ et/ou de F₃C(CF₂)₇(CH₂)₂Si(OC₂H₅)₃ dans le décane ou dans un solvant perfluoré commercialisé par la Société 3M sous la référence « Fluorinert FC 77 ». La teneur pondérale totale en triéthoxysilane et en trichlorosilane est de 2,5 %, et lorsque ces deux composés sont simultanément présents, ils le sont chacun à raison de 1,25 % en poids.

Préalablement, on effectue un nettoyage du substrat au savon RBS ou avec une solution d'oxyde de cérium à 20 % en poids.

Dans une partie, mais non la totalité des essais, on traite le substrat nettoyé avec une solution de primage à base de Si(OCH₃)₄ en milieu éthanol/(eau + HCl 0,3N):90/10 en poids.

La solution de silane(s) hydrophobe(s)/oléophobe(s) mentionnée précédemment est appliquée à l'aide d'un support imbibé tel qu'un chiffon.

Dans certains essais seulement, on soumet finalement le substrat à un traitement thermique de 80°C pendant 8 heures.

On évalue chaque substrat traité selon les trois critères suivants :
- la mesure de l'angle de contact de l'eau initial est une indication quantitative du caractère hydrophobe du substrat juste après le traitement ;
- la hauteur de la bande de vibration d'élongation ν(CF₂) absorbant vers 1146 cm⁻¹, étudiée en spectroscopie FTIR, indique la densité des groupements CF₂ greffés sur le substrat ;
- la mesure de l'angle de contact de l'eau au cours du test Taber effectué au moyen des meules CS 10 F, avec application d'une force de 500 g, est une indication quantitative du caractère hydrophobe du substrat traité, après que celui-ci muni de son revêtement a subi l'abrasion de 60 tours, respectivement de 100 tours de meules. Cette mesure permet donc d'évaluer la résistance à l'abrasion du revêtement hydrophobe/oléophobe greffé.

Les résultats sont consignés dans le tableau en annexe, dans lequel sont employées les abréviations suivantes :
- les agents hydrophobes sont désignés par des chiffres :
   - F₃C(CF₂)₇(CH₂)₂SiCl₃ : ① et
   - F₃C(CF₂)₇(CH₂)₂Si(OC₂H₅)₃ : ② ;
   - le nettoyage du substrat au moyen d'une solution d'oxyde de cérium est signalé par le signe ★ ; à défaut le substrat est nettoyé par savon RBS ;
   - la préparation éventuelle du substrat par primage est signalée par le signe ⊕ ;
   - les solvants décane et perfluoré sont désignés par solvant d, respectivement solvant p.

La comparaison des exemples 1 et 2 illustre la supériorité du solvant perfluoré sur le décane. On observe un léger accroissement du caractère hydrophobe initial comme de la durabilité (angles de contact de l'eau initial et au cours du test Taber). Mais plus significative encore est l'augmentation de la densité des groupes CF₂ greffés sur le substrat.

En effet, l'épaisseur des dépôts des exemples 1 et 2, déterminée par réflectométrie des rayons X, est de l'ordre de 17 Å dans les deux cas. Les quantités de CF₂ plus importantes détectées en solvant perfluoré sont attribuables à une meilleure organisation de la couche greffée dans ce solvant, c'est-à-dire un meilleur recouvrement, un meilleur taux de greffage et, à un nombre moindre de zones sans silane fluoré.

L'exemple 3 met en oeuvre un triéthoxysilane perfluoré comme unique agent hydrophobe ; il se caractérise par un angle de contact de l'eau initial relativement bas. D'autre part, la densité des groupes CF₂ greffés est inférieure au seuil de détection de 10⁻³.

L'exemple 5 est à comparer à la fois à l'exemple 2 et à l'exemple 3. On observe une augmentation de l'angle de contact initial. Autrement dit, la propriété hydrophobe est conférée par le mélange des agents ①+② à un dégré plus élevé que par l'agent ① ou l'agent ② seul. D'autre part, les performances en durabilité, traduites par les résultats de la dernière colonne du tableau, sont d'un très bon niveau.

Comme indiqué à l'exemple 4, à considérer en comparaison avec l'exemple 5, le nettoyage initial du substrat au savon RBS est légèrement inférieur au nettoyage à l'oxyde de cérium relativement aux trois propriétés évaluées.

Selon l'exemple 6, en relation avec l'exemple 4, l'absence de primage se traduit principalement par une perte en durabilité.

Les exemples 7 et 8 sont à comparer, respectivement, aux exemples 4 et 5. L'amélioration en durabilité due au traitement thermique n'est sensible que dans le cas du nettoyage du substrat au savon RBS.

Ces résultats établissent la synergie du trialkoxysilane perfluoré et du trichlorosilane perfluoré dans l'obtention d'un niveau élevé d'hydrophobie et de résistance à l'abrasion du revêtement greffé.

| Exemple n° | Conditions de dépôt | Angle de contact de l'eau initial | Hauteur en unités d'absorbance de la vibration d'élongation *v*(CF₂) absorbant vers 1146 cm⁻¹ | Angle de contact de l'eau au cours du test Taber |
|---|---|---|---|---|
| 1 | ① en solvant d ★ ⊕ | 106° ± 1° | < 10⁻³ | ◆ 78° ± 3° après 60 tours ◆ 65° ± 4° après 100 tours |
| 2 | ① en solvant p ★ ⊕ | 107° ± 1° | 2.10⁻³ | ◆ 80° ± 2° après 60 tours ◆ 68° ± 5° après 100 tours |
| 3 | ② en solvant p ★ ⊕ | 92° ± 1° | < 10⁻³ | ◆ 64° ± 4° après 60 tous |
| 4 | ①+② en solvant p ⊕ | 107° ± 1° | 1,4.10⁻³ | ◆ 84° ± 3° après 60 tours ◆ 70° ± 3° après 100 tours |
| 5 | ①+② en solvant p ★ ⊕ | 109° ± 1° | 1,5.10⁻³ | ◆ 91° ± 3° après 60 tours ◆ 81° ± 3° après 100 tours |
| 6 | ①+② en solvant p | 106° ± 1° | 1,7.10⁻³ | ◆ 66° ± 3° après 60 tours |
| 7 | ①+② en solvant p ⊕ avec traitement thermique | 105° ± 1° | 1,6.10⁻³ | ◆ 99° ± 1° après 60 tours ◆ 95° ± 1° après 100 tours |
| 8 | ①+② en solvant p ★ ⊕ avec traitement thermique | 108° ± 1° | 1,8.10⁻³ | ◆ 92° ± 4° après 60 tours ◆ 80° ± 2° après 100 tours |

## Revendications

1. Composition pour un revêtement hydrophobe/oléophobe contenant au moins un alkoxysilane et au moins un halogénosilane comportant chacun, à une extrémité au moins de leur molécule, un groupement perfluoré, dans laquelle :
- ledit alkoxysilane est un perfluoroalkylalkoxysilane de formule (I) :
F₃C-(CF₂)₇-(CH₂)₂-Si-(OR)₃
- ledit halogénosilane est un perfluoroalkyl-halogénosilane de formule (II) :
F₃C-(CF₂)₇-(CH₂)₂-Si-X₃
dans lesquelles :
• R est un groupe méthyle ou éthyle; et
• X est un atome de chlore.

2. Composition selon la revendication 1, dans laquelle le rapport molaire de l'alkoxysilane à l'halogénosilane est compris entre 80:20 et 20:80, de préférence entre 60:40 et 40:60.

3. Composition selon l'une quelconque des revendications 1 ou 2, consistant en une solution dans un solvant organique perfluoré.

4. Procédé de formation d'un revêtement hydrophobe/oléophobe sur un substrat, à partir d'une composition selon l'une quelconque des revendications 1 à 3, comprenant les étapes consistant à :
• nettoyer le substrat,
• appliquer de préférence un primaire, tel qu'à base de silane à quatre groupements hydrolysables, du type tri- ou tétraalkoxysilane ou tri- ou tétrahalogénosilane ;
• appliquer ladite composition, et
• soumettre, le cas échéant, l'ensemble à un traitement thermique.

5. Procédé selon la revendication 4, dans lequel l'oxyde de cérium est utilisé pour nettoyer le substrat.

## Claims

1. Composition for a hydrophobic/oleophobic coating containing at least one alkoxysilane and at least one halosilane, each having, at at least one end of their molecule, a perfluorinated group, wherein :
- said alkoxysilane is a perfluoroalkylalkoxysilane of formula (I) :
F₃C-(CF₂)₇-(CH₂)₂-Si-(OR)₃
- said halosilane is a perfluoroalkyl-halosilane of formula (II) :
F₃C-(CF₂)₇-(CH₂)₂-Si-X₃
in which :
• R is a methyl or ethyl group,
• X is a chlorine atom.

2. Composition according to Claim 1, **characterized in that** the molar ratio of alkoxysilane to halosilane is between 80:20 and 20:80, preferably between 60:40 and 40:60.

3. Composition according to any one of Claims 1 or 2, consisting of a solution in a perfluorinated organic solvent.

4. Process for forming a hydrophobic/oleophobic coating on a substrate, from a composition according to any one of Claims 1 to 3, **characterized in that** it comprises the steps consisting in:
• cleaning the substrate,
• preferably applying a primer, for example based on a silane having four hydrolysable functional groups, such as tri- or tetraalkoxysilane or tri- or tetrahalosilane;
• applying the said composition, and
• optionally subjecting the system to a heat treatment.

5. Process according to Claim 4, **characterized in that** cerium oxide is used to clean the substrate.

## Patentansprüche

1. Zusammensetzung für eine hydrophobe/oleophobe Beschichtung, die mindestens ein Alkoxysilan und mindestens ein Halogensilan enthält, die jeweils an wenigstens einem Ende ihres Moleküls eine perfluorierte Gruppe umfassen, in welcher:
- das Alkoxysilan ein Perfluoralkylalkoxysilan mit der Formel (I):
F₃C-(CF₂)₇-(CH₂)₂-Si-(OR)₃
- und das Halogensilan ein Perfluoralkylhalogensilan mit der Formel (II):
F₃C-(CF₂)₇-(CH₂)₂-Si-X₃
ist, in welchen
• R eine Methyl- oder Ethylgruppe und
• X ein Chloratom bedeutet.

2. Zusammensetzung nach Anspruch 1, in welcher das Molverhältnis von Alkoxysilan zu Halogensilan 80:20 bis 20:80 und vorzugsweise 60:40 bis 40:60 beträgt.

3. Zusammensetzung nach einem der Ansprüche 1 oder 2, welche aus einer Lösung in einem perfluorierten organischen Lösungsmittel besteht.

4. Verfahren zur Bildung einer hydrophoben/oleophoben Beschichtung aus einer Zusammensetzung nach einem der Ansprüche 1 bis 3 auf einem Substrat, welches die Stufen umfasst, die darin bestehen,
• das Substrat zu reinigen,
• vorzugsweise einen Haftvermittler wie einen auf der Basis eines Silans mit vier hydrolysierbaren Gruppen vom Typ Tri- bzw. Tetraalkoxysilan oder Tri- bzw. Tetrahalogensilan aufzubringen,
• die Zusammensetzung aufzubringen und
• gegebenenfalls das Ganze einer Wärmebehandlung zu unterwerfen.

5. Verfahren nach Anspruch 4, in welchem zum Reinigen des Substrats Ceroxid verwendet wird.
